(19) Europäisches Patentamt
European Patent Office
Office européen des brevets

(11) **EP 1 462 779 B1**

(12) **EUROPÄISCHE PATENTSCHRIFT**

(45) Veröffentlichungstag und Bekanntmachung des Hinweises auf die Patenterteilung:
**21.05.2008 Patentblatt 2008/21**

(21) Anmeldenummer: **04007299.3**

(22) Anmeldetag: **26.03.2004**

(51) Int Cl.:
***G01H 3/08*** *(2006.01)*

(54) **Verfahren und Vorrichtung zur Analyse von Motorgeräuschen**

Method and device for the analysis of engine noise

Procédure et dispositif pour l'analyse des bruits d'un moteur

(84) Benannte Vertragsstaaten:
**DE FR GB**

(30) Priorität: **26.03.2003 EP 03100787**

(43) Veröffentlichungstag der Anmeldung:
**29.09.2004 Patentblatt 2004/40**

(73) Patentinhaber: **Ford Global Technologies, LLC Dearborn, MI 48126 (US)**

(72) Erfinder:
• **Leonhard, Thorsten**
  **41539 Dormagen (DE)**
• **Heinrichs, Ralf, Dr.**
  **50859 Köln (DE)**
• **Bodden, Markus, Dr.**
  **45131 Essen (DE)**

(74) Vertreter: **Bonsmann, Joachim Bernhard Bonsmann & Bonsmann Patentanwälte Kaldenkirchener Strasse 35 a 41063 Mönchengladbach (DE)**

(56) Entgegenhaltungen:
**EP-A- 0 718 608          DE-A- 19 927 693**

• **BODDEN M, HEINRICHS R: "Analysis of the time structure of gear rattle" PROCEEDINGS OF INTERNOISE 99, 2. - 4. Dezember 1999, Seiten 1273-1278, XP002253660 Fort Lauderdale, Florida, USA**
• **PATENT ABSTRACTS OF JAPAN vol. 1999, no. 09, 30. Juli 1999 (1999-07-30) -& JP 11 108806 A (OKI ELECTRIC IND CO LTD), 23. April 1999 (1999-04-23)**
• **PATENT ABSTRACTS OF JAPAN vol. 017, no. 070 (P-1485), 12. Februar 1993 (1993-02-12) -& JP 04 276523 A (TOSHIBA CORP), 1. Oktober 1992 (1992-10-01)**

## Beschreibung

Die Erfindung betrifft ein Verfahren sowie eine Vorrichtung zur Verarbeitung von Geräuschen eines Verbrennungsmotors, insbesondere von Geräuschen eines Dieselmotors.

Bekannte Verfahren zur Filterung von Signalen bewirken eine Veränderung des spektralen Inhaltes der Signale. Modulierte Signalanteile können dabei nur in der Art verändert werden, dass die Signalanteile der zugehörigen Trägerfrequenzen reduziert werden. Es werden folglich nicht die Modulationen, sondern der Träger reduziert. Dies trifft auch auf Signale zu, die im signaltheoretischen Sinne nicht moduliert sind, sondern die (mehr oder weniger) periodische impulshaltige Signalanteile aufweisen. Dies ist insbesondere bei Getriebegeräuschen oder Geräuschen von Verbrennungsmotoren der Fall.

Bei der Auslegung eines Verbrennungsmotors - wie beispielsweise eines Benzinmotors mit Direkteinspritzung und Funkenzündung oder insbesondere eines Dieselmotors - spielt die Minimierung von Geräuschemissionen eine zunehmend wichtige Rolle. Die Motorgeräusche entstehen typischerweise durch Verbrennungsgeräusche und Geräusche des Injektors. Um die Konstruktion von Verbrennungsmotoren gezielt hinsichtlich der Geräuschminimierung verbessern zu können, ist eine zuverlässige und reproduzierbare quantitative Analyse von Motorgeräuschen wichtig. Dieses Ziel wird durch die bisher bekannten Analyseverfahren für Motorgeräusche nicht in befriedigendem Maße erreicht. Insbesondere ist keine adäquate Beschreibung für die impulsartigen Anteile der Verbrennungsgeräusche, die den menschlichen Höreindruck gerade bei Dieselmotoren prägen, bekannt ("Nageln").

Vor diesem Hintergrund war es eine Aufgabe der vorliegenden Erfindung, Mittel zur Verarbeitung Signalen bereitzustellen, insbesondere von solchen Signalen, die moduliert sind bzw. periodisch impulshaltige Signalanteile enthalten.

Diese Aufgabe wird durch ein Verfahren mit den Merkmalen des Anspruchs 1 sowie durch eine Vorrichtung mit den Merkmalen des Anspruchs 6 gelöst.

Vorteilhafte Ausgestaltungen sind in den Unteransprüchen enthalten.

Das erfindungsgemäße Verfahren zur Verarbeitung von Geräuschen eines Verbrennungsmotors bzw. Dieselmotors enthält die folgenden Schritte:

- Ermittlung eines Modulationsfrequenzspektrums des Signals;

- Filterung des Modulationsfrequenzspektrums und Rücktransformation des gefilterten Modulationsfrequenzspektrums in einen Signalverlauf.

Bei der sog. Modulationsanalyse wird die Hüllkurve eines Signals untersucht, um z.B. periodisch stattfindende Modulationen des Signals zu ermitteln. Die Modulationsanalyse kann entweder direkt auf die Hüllkurve des zeitlichen Signalverlaufes angewendet werden oder auf bandpass-gefilterte Signale, um die Modulation von Trägerfrequenzen zu ermitteln (vgl. M. Bodden, R. Heinrichs: "Analysis of the time structure of gear rattle", PROCEEDINGS OF INTERNOISE 99, 2.-4. Dezember 1999, Seiten 1273-1278, XP002253660, Fort Lauderdale, Florida, USA; dieses Dokument wird durch Bezugnahme vollständig in die vorliegende Anmeldung aufgenommen). Das Modulationsfrequenzspektrum wird erfindungsgemäß durch die Modulationsfilter gezielt verändert, und entsprechende Rücktransformationen erlauben die Bestimmung eines modulationsgefilterten Signals. Dieses Signal zeichnet sich dadurch aus, dass nur die Modulationen bzw. periodischen impulshaltigen Anteile verändert wurden, während die spektralen Anteile nahezu unverändert bleiben.

Gemäß des Verfahrens wird dieses mit Hilfe von Kurzzeit-Frequenzspektren durchgeführt und enthält ,die folgenden Schritte:

a) Aufzeichnung des Signalverlaufes $p(k)$, $0 \leq k \leq K$, über eine vorgegebene Aufzeichnungsdauer K. Der Signalverlauf p kann dabei z. B. den Schalldruckpegel (Körper- oder Luftschall) eines (Motor-)Geräusches beschreiben und mit Hilfe eines Mikrofons gemessen werden. Die Zeitvariablen k, K können sowohl kontinuierlich als auch — wie im Rahmen der Erfindung bevorzugt - diskret sein.

b) Ermittlung von Kurzzeit-Frequenzspektren $P(n, l)$ für den gesamten Signalverlauf $p(k)$, $0 \leq k \leq K$. Jedes der Kurzzeit-Frequenzspektren stellt das Spektrum des Signalverlaufes $p(k)$ in einem im Vergleich zur Aufzeichnungsdauer K kurzen Zeitfenster der Breite $N < K$ dar, wobei das Zeitfenster bei einem Zeitpunkt $k_l$ aus dem Intervall der Aufnahmedauer liegt (d.h. $0 \leq k_l \leq K$), und wobei 1 ein Index ist ($0 \leq l \leq L$). Der Zeitpunkt $k_l$ stellt dabei eine die Lage des Zeitfensters beschreibende Zeitmarke dar, beispielsweise den Mittelpunkt des Zeitfensters oder einen definierten Randpunkt des Zeitfensters. Die Berücksichtigung des "gesamten" Signalverlaufes bedeutet, daß die Zeitfenster derart gewählt und gelegt werden, daß diese den Signalverlauf lückenlos - gegebenenfalls sogar mit Überlappungen - überdecken. Ein Wert $P(n, l)$ beschreibt den Anteil der Frequenz n am Signalverlauf p innerhalb des bei $k_l$ gelegenen Zeitfensters.

Der Signalverlauf kann durch Fourier-Zerlegung (bevorzugt diskret) oder auch durch konventionelle Filter (z.B. Anwendung einer Terz-Filterbank) spektral in Kurzzeit-Frequenzspektren aufgeteilt werden.

c) Ermittlung der Modulationsfrequenzspektren $P_m(n, m)$ zu den vorstehend genannten Kurzzeit-Frequenzspektren $P(n, l)$. Für jede gegebene Frequenz $n_0$ können die zugehörigen betragsmäßigen Anteile $|P(n_0, l)|$ als ein Trägersignal über der Variablen $0 \leq l \leq L$ betrachtet werden, welches spektral analysiert werden kann. Das Ergebnis dieser Spektralanalyse stellt dann das Modulationsfrequenzspektrum $P_m(n_0, m)$ dar, wobei die Werte $P_m(n_0, m)$ den zur Modulationsfrequenz m gehörenden Anteil des bei der Frequenz $n_0$ gebildeten Trägersignals $|P(n_0, l)|$ darstellen. Die Modulationsfrequenzspektren können je nach gewählter spektraler Aufteilung unter b) durch eine weitere Fourier-Zerlegung (bevorzugt diskret) oder durch eine weitere konventionelle Filterung bestimmt werden.

d) Filterung mindestens eines der genannten Modulationsfrequenzspektren $P_m(n, m)$ und Rücktransformation des gefilterten Modulationsfrequenzspektrums in einen Signalverlauf.

Das beschriebene Verfahren beruht somit auf einer zweistufigen Spektralanalyse des Signals. Bei der ersten Spektralanalyse werden Kurzzeit-Frequenzspektren in verschiedenen Zeitfenstern entlang des Signalverlaufes berechnet. Die verschiedenen Frequenzkanäle dieser Kurzzeit-Frequenzspektren werden sodann jeweils als ein zeitliches Trägersignal aufgefaßt, welches einer zweiten Spektralanalyse unterworfen werden kann, um ein Modulationsfrequenzspektrum zu berechnen.

Das Verfahren kann grundsätzlich an kontinuierlichen Signalverläufen mit Hilfe von kontinuierlichen Spektralanalysen oder durch Anwendung konventioneller Filter bzw. Filterbänke (z.B. Terz-Filterbank) durchgeführt werden. Vorzugsweise erfolgt indes die Aufzeichnung und Analyse des Signalverlaufes $p(k)$ zeitdiskret. In diesem Falle kann das Verfahren mit Hilfe von leistungsstarken Algorithmen auf einer elektronischen Datenverarbeitungseinheit ausgeführt werden. Im Folgenden wird daher überwiegend davon ausgegangen, daß eine zeitdiskrete Formulierung des Verfahrens vorliegt, wobei sich die Ausführungen in der Regel jedoch analog auf zeitkontinuierliche Ausführungsformen übertragen lassen und die Erfindung diesbezüglich nicht eingeschränkt sein soll.

Gemäß einer bevorzugten Ausführungsform des Verfahrens werden die Kurzzeit-Frequenzspektren $P(n, l)$ mittels einer Diskreten Fourier-Transformation (DFT) gewonnen (in der kontinuierlichen Verfahrensvariante würde an deren Stelle eine kontinuierliche Fourier-Transformation treten). Diese läßt sich durch die folgende Formel beschreiben:

$$P(n, l)\bigg|_{l=0}^{L} = \sum_{k=l\,N\,(1-O)}^{l\,N\,(1-O)+(N-1)} p(k) \cdot w(k - l\,N\,(1-O)) \cdot e^{-j\frac{2\pi k n}{N}}\bigg|_{l=0}^{L}.$$

Darin bedeutet die Größe O (mit $0 \leq O \leq 1$) ein Maß für den Überlapp der Zeitfenster, in denen die Kurzzeit-Frequenzspektren bestimmt werden, wobei $O = 0$ keinen Überlapp und $O = 1$ einen 100%igen Überlapp bedeutet. Die Größe w ist eine Fensterfunktion, die dazu dient, aus dem Signalverlauf $p(k)$ ein Fenster der gewünschten Breite N auszuschneiden. An den Rändern des Fensters sollte dabei möglichst ein sanftes Ausblenden des Signalverlaufes erfolgen, was z. B. durch ein Hanning-Fenster der Breite N (d.h. die Funktion $w(n) = (1-\cos(2\pi n/N))/2$, $-N/2 \leq n \leq N/2$) sehr gut erreicht wird.

Auch die Modulationsfrequenzspektren $P_m(n, m)$ werden vorzugsweise durch eine diskrete Fourier-Transformation gewonnen, welche sich durch die Formel

$$P_m(n, m)\bigg|_{n=0}^{N} = \sum_{l=0}^{M-1} |P(n, l)| \cdot w(l) \cdot e^{-j\frac{2\pi l m}{M}}\bigg|_{n=0}^{N}.$$

beschreiben läßt. Hierin bedeutet w eine Fensterfunktion der Breite M, bei der es sich vorzugsweise ebenfalls um ein Hanning-Fenster handelt.

Gemäß einer bevorzugten Weiterbildung der Erfindung wird aus den Modulationsfrequenzspektren $P_m(n, m)$ ein Modulationsindex $P_{m,}(n, m)$ berechnet gemäß der folgenden Formel:

$$P_{mi}(n,m)\Big|_{n=0}^{N} = 2\,\frac{|P_m(n,m)|}{|P_m(n,0)|} = 2\,\frac{\left|\sum_{l=0}^{M-1}|P(n,l)|\cdot w(l)\cdot e^{-j\frac{2\pi l m}{M}}\right|}{\left|\sum_{l=0}^{M-1}|P(n,l)|\cdot w(l)\right|}\Bigg|_{n=0}^{N}.$$

Der Modulationsindex gibt an, wie stark die jeweilige Trägerfrequenz n bei den einzelnen Modulationsfrequenzen m moduliert ist, und liefert damit ein Maß für die Ausgeprägtheit der zeitlichen Struktur. Der Betrag des Modulationsfrequenzspektrums wird dabei auf dessen Gleichanteile $P_m(n,0)$ normiert.

Das Modulationsfrequenzspektrum $P_m(n, m)$ wird bei dem erfindungsgemäßen Verfahren gefiltert und anschließend in einen (virtuellen) Signalverlauf rücktransformiert. Die Filterung besteht darin daß bestimmte Zonen des Modulationsfrequenzspektrums mit einem Faktor kleiner als Eins multipliziert werden. Auf diese Weise können z.B. gezielt die für Impulsanteile eines Motorgeräusches verantwortlichen Anteile des Modulationsfrequenzspektrums unterdrückt werden, wobei sich der Erfolg dieses Vorgehens anhand des rekonstruierten Signalverlaufes durch eine Testperson beurteilen läßt. Eine derartige Modulationsfrequenzfilterung kann im Rahmen eines computerunterstützten Engineering (CAE) für eine Verbesserung der Motorkonstruktion verwendet werden. Ferner wird hierdurch die Festlegung einer Akzeptanzschwelle mit Hilfe objektiver Parameter ermöglicht.

Die Erfindung betrifft ferner eine Vorrichtung zur Verarbeitung von Signalen wie beispielsweise den Geräuschen eines Verbrennungsmotors, insbesondere eines Dieselmotors. Die Vorrichtung enthält eine Datenverarbeitungseinheit mit einem Speicher, in dem insbesondere ein gemessener Signalverlauf p(k), z.B. des zu verarbeitenden Geräusches gespeichert sein kann. Weiterhin ist die Datenverarbeitungseinheit dahingehend ausgebildet, ein Verfahren der vorstehend beschriebenen Art auszuführen. Dies geschicht dadurch, daß das Verfahren implementierende Programme im Speicher der Datenverarbeitungseinheit abgelegt sind.

Im Folgenden wird die Erfindung mit Hilfe der Figuren beispielhaft näher erläutert.

Es zeigen:

Fig. 1  das Prinzip der Berechnung von Modulationsfrequenzspektren aus Kurzzeitfrequenzspektren eines Signalverlaufes;

Fig. 2  einen stilisierten (oben) und einen real berechneten (unten) zeitlichen Verlauf des Betrags eines Kurzzeitspektrums;

Fig. 3  ein stilisiertes (oben) und ein real berechnetes (unten) Modulationsfrequenzspektrum zu dem Kurzzeit-Spektrum von Figur 2;

Fig. 4  den Modulationsindex eines schwach (oben) und eines stärker (unten) modulierten Signalverlaufes;

Fig. 5  einen Signalverlauf (links), das zugehörige Kurzzeitfrequenzspektrum (Mitte), und das Modulationsfrequenzspektrum (rechts) mit einem darin eingetragenen Modulationsfilter;

Fig. 6  den Modulationsindex eines Dieselgeräusches mit markierten Modulationsfrequenzen bei Vielfachen der halben Motorordnung;

Fig. 7  eine Gegenüberstellung zwischen der Beurteilung eines Dieselgeräusches durch Versuchspersonen (horizontale Achse) und einem berechneten Geräuschindex (vertikale Achse).

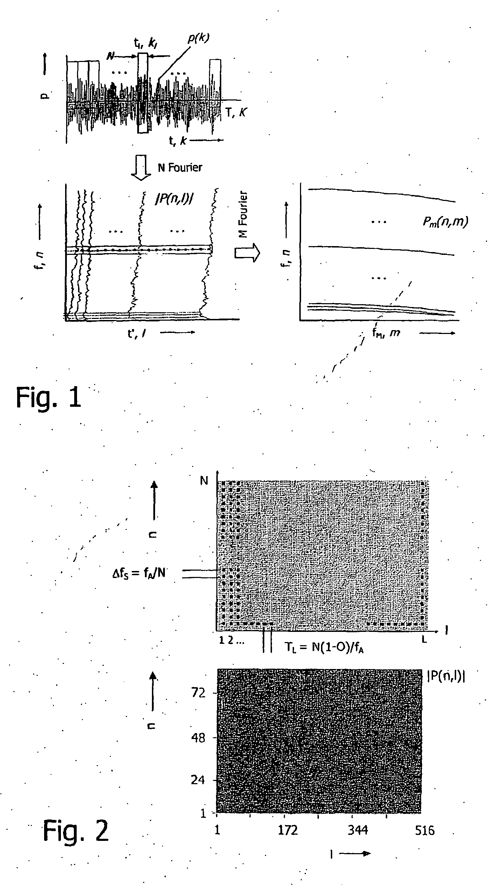

In der nachfolgenden Beschreibung wird ein Verfahren zur Modulationsanalyse auch als "Narrow Band Modulation Analysis" (NBMA) bezeichnet. Figur 1 zeigt das Prinzip dieses NBMA Verfahrens anhand der Analyse des Zeitverlaufes eines aufgenommenen Motorgeräusches der Amplitude p. Hierbei kann es sich z. B. um das Leerlaufgeräusch des Motors für eine Dauer von T = 3 s handeln. Alternativ zur kontinuierlichen Beschreibung mit der Zeitvariablen t kann das Signal auch zeitdiskret mit dem Zeitindex $0 \leq k \leq K$ beschrieben werden.

Der Signalverlauf p wird mit einem sich bewegenden Hanning-Fenster (typischerweise 10 ms breit entsprechend N diskreten Werten k) und einer Überlappung von 50% spektral analysiert, was die im linken unteren Diagramm von Figur 1 gezeigten Kurzzeitfrequenzspektren liefert. Dabei wird in jedem Zeitfenster zur Zeit $t_l$ (bzw. diskret $k_l$) eine Fourier-Transformation (bzw. eine Diskrete Fourier-Transformation DFT) berechnet, wobei im linken unteren Diagramm nur deren Beträge (diskret: |P(n, l)|) eingetragen sind. Für jede Frequenzlinie f (bzw. diskret jede Frequenz n; siehe horizontale Linie im Diagramm unten links), welche nachfolgend als "Trägerfrequenz" bezeichnet wird, stellen die einzelnen Anteile in den verschiedenen Kurzzeitfrequenzspektren einen zeitlichen (unterabgetasteten) Verlauf dar, d.h. ein Trägersignal. Dieses Trägersignal kann dann einer zweiten Fourier-Analyse unterworfen werden, deren Ergebnis für jedes Trägersignal zu jeder Trägerfrequenz f (bzw. n) im Diagramm rechts unten von Figur 1 dargestellt ist. Auf diese Weise wird das gesamte Modulationsfrequenzspektrum (diskret: $P_m$(n, m)) erhalten. Aus diesem ist dann ersichtlich, mit welcher Amplitude der ursprüngliche Signalverlauf bei der jeweiligen Trägerfrequenz n moduliert ist.

Da der Amplitude des Modulationsfrequenzspektrums selber nicht entnommen werden kann, wie stark das Signal bei der Trägerfrequenz tatsächlich moduliert ist, wird der Modulationsindex $P_{mi}$(n, m) berechnet. Hierzu wird zusätzlich die Amplitude der entsprechenden Trägerfrequenz berücksichtigt. Zur Bildung des Modulationsindex $P_{mi}$(n, m) wird jede einzelne Frequenzlinie n der entsprechenden Modulationsfrequenzlinie m durch die zugehörige Modulationsamplitude der Modulationsfrequenzlinie an der Stelle m = 0 dividiert. Da diese Modulationsfrequenz genau der Frequenzlinie n der Trägerfrequenz entspricht, wird somit der Grad der Modulation berechnet.

Durch ein Modulationsfilter können nun gezielt Werte im Modulationsfrequenzspektrum verändert werden, wodurch Modulationen bei definierten Träger- und Modulationsfrequenzen sowohl abgeschwächt als auch angehoben werden können. Eine entsprechende zweimalige Anwendung von Rück-DFTs liefert schließlich das modulationsgefilterte Zeitsignal.

Die einzelnen Verarbeitungsschritte werden im Folgenden dargestellt.

**Das Modulationsfrequenzspektrum**

Ausgangspunkt des Modulationsfrequenzspektrums ist der aus der ursprünglich zeitlichen Folge p(k) berechnete zeitliche Verlauf der Kurzzeit-DFT.

$$P(n,l)\Big|_{l=0}^{L} = \sum_{k=lN(1-O)}^{lN(1-O)+(N-1)} p(k) \cdot w(k - lN(1-O)) \cdot e^{-j\frac{2\pi kn}{N}} \Big|_{l=0}^{L} \qquad (1)$$

.

Die Betragsbildung der Kurzzeitspektren liefert zunächst Gl. (2)

$$|P(n,l)| = \left| \sum_{k=lN(1-O)}^{lN(1-O)+N-1} p(k) \cdot w(k - lN(1-O)) \cdot e^{-\frac{j2\pi kn}{N}} \right| \qquad (2)$$

Das gleitende Hanning-Fenster führt somit zu L + 1 Spektren mit jeweils N spektralen Stützstellen.

Figur 2 zeigt im oberen Teil anhand einer stilisierten Darstellung den Aufbau des zeitlichen Verlaufes der Kurzzeitspektren, während der untere Teil von Figur 2 diesbezüglich den real berechneten zeitlichen Verlauf für ein Kunstkopf-Meßsignal p(k) darstellt.

Nun wird jede einzelne Frequenzlinie n des gleitenden Fensters l = 0, 1, 2, ... , L als Trägersignal betrachtet, über deren zeitlichen Verlauf erneut eine DFT berechnet wird. Das Trägersignal selber wird zuvor mit einem Hanning-Fenster w(l) der Länge M gewichtet, so daß folglich Gl. (3) für das daraus entstehende Modulationsspektrum geschrieben werden kann:

$$P_m(n,m)\Big|_{n=0}^{N} = \sum_{l=0}^{M-1} |P(n,l)| \cdot w(l) \cdot e^{-j\frac{2\pi lm}{M}} \Big|_{n=0}^{N} \qquad (3)$$

Hierbei gilt für die Anzahl der Modulationsfrequenzstützstellen $M \leq L + 1$, wobei die erforderliche Stützstellenzahl M die notwendige Länge der zu analysierenden Zeitfunktion bestimmt.

Da die Modulationsfrequenzen im Vergleich zur Signalfrequenz naturgemäß wesentlich niederfrequenter sind, ist weiterhin darauf zu achten, daß die spektrale Auflösung den physikalischen Gegebenheiten entsprechend fein genug ist. Die spektrale Auflösung der Modulationsanalyse ergibt sich hier mit $\Delta f_m = f_A'/M$ und $f_A' = 1/T_L$ zu

$$\Delta f_m = \frac{1}{T_L \cdot M} = \frac{f_A}{N \cdot (1-O) \cdot M} \qquad (4)$$

Die Berechnung von $N$ DFTs jeweils über die $L + 1$ Stützstellen mit der Abtastfrequenz $f_A'$ führt zu einem Modulationsfrequenzspektrum, welches $M$ Stützstellen gemäß Gl. (5) aufweist:

$$|P_m(n,m)| = \left| \sum_{l=0}^{M-1} |P(n,l)| \cdot w(l) \cdot e^{-\frac{j2\pi lm}{M}} \right| \qquad (5)$$

Die maximale bestimmbare Modulationsfrequenz ergibt sich zu

$$f_{m,\max} = \frac{M}{2} \cdot \Delta f_m = \frac{f_A}{N \cdot 2 \cdot (1-O)} \qquad (6)$$

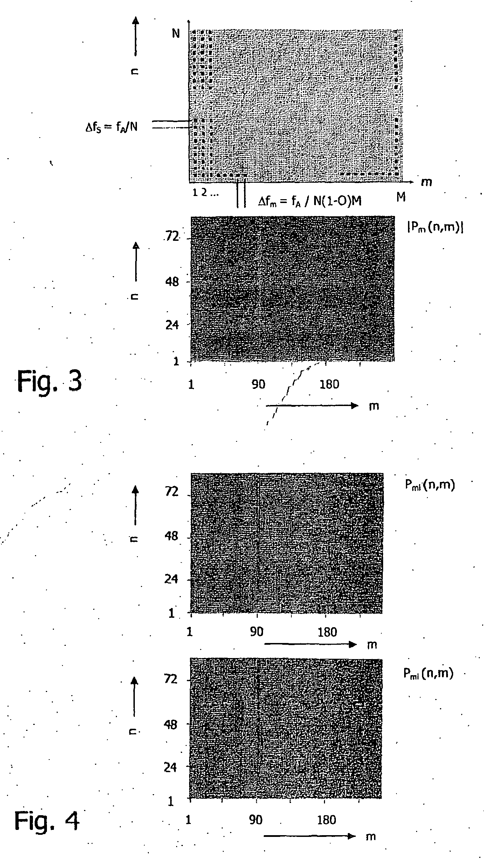

Figur 3 zeigt im oberen Teil anhand einer stilisierten Darstellung den Aufbau des Modulationsfrequenzspektrums, während im unteren Teil ein real berechnetes Modulationsfrequenzspektrum des Kunstkopf-Meßsignals $p(k)$ dargestellt ist.

**Der Modulationsindex**

Der Modulationsindex gibt an, wie stark die jeweilige Trägerfrequenz bei den einzelnen Modulationsfrequenzen moduliert ist, und liefert damit ein Maß, welches die Ausgeprägtheit der zeitlichen Struktur beschreibt. Der Betrag des Modulationsfrequenzspektrums wird hierzu auf die beim Gleichanteil des Modulationsfrequenzspektrums auftretenden Amplituden bezogen, d.h. in Gl. (5) wird $m = 0$ gesetzt und der dabei entstehende Term als Divisor in Gl. (7) eingesetzt.

$$P_{mi}(n,m) \Big|_{n=0}^{N} = 2 \frac{|P_m(n,m)|}{|P_m(n,0)|} = 2 \frac{\left| \sum_{l=0}^{M-1} |P(n,l)| \cdot w(l) \cdot e^{-j\frac{2\pi lm}{M}} \right|}{\left| \sum_{l=0}^{M-1} |P(n,l)| \cdot w(l) \right|} \Bigg|_{n=0}^{N} \qquad (7)$$

Figur 4 zeigt den real berechneten Modulationsindex eines schwach modulierten Kunstkopfmeßsignals $p(k)$ (oben) und eines stärker modulierten Kunstkopfmeßsignals (unten).

**Narrow Band Modulation Filter (NBMF)**

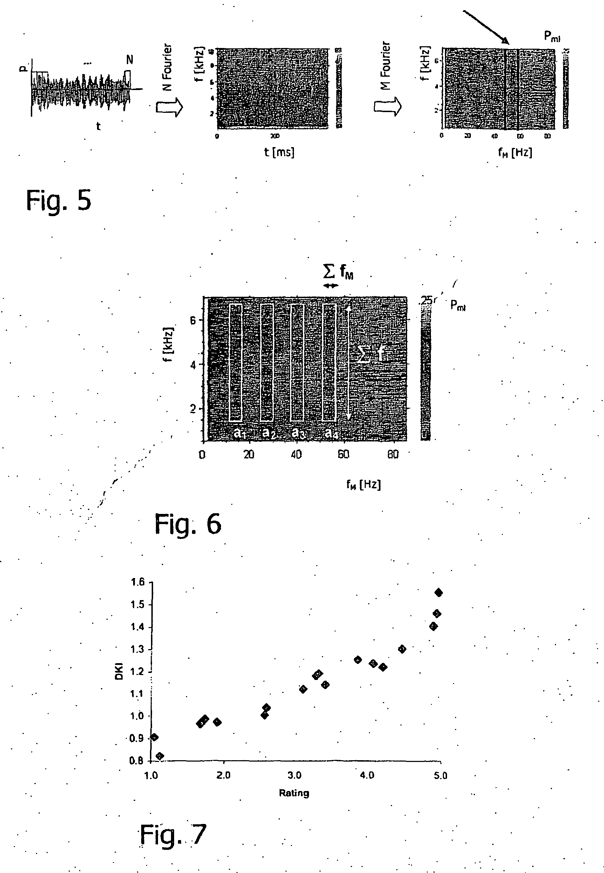

Die vorstehend beschriebene Technik kann derart erweitert werden, daß eine Filterung im Modulationsbereich möglich wird. Im Gegensatz zur üblicherweise verwendeten Technik der Filterung im Frequenzbereich bleibt hier das mittlere Spektrum erhalten, es können jedoch gezielt Modulationen und damit die Zeitstruktur verändert werden.
Das Modulationsfilter wird direkt auf den Betrag des Modulationsfrequenzspektrums entsprechend Gl. (5) angewandt. Der Vorteil der hier verwendeten Narrow Band Modulation Analysis besteht darin, daß das Filter in Abhängigkeit von der Trägerfrequenz und der Modulationsfrequenz festgelegt werden kann. So ist es z. B. möglich, Modulationen bei bestimmten Motorordnungen über einen bestimmten Frequenzbereich zu filtern, während die übrigen Modulationen unverändert bleiben. Figur 5 zeigt dies schematisiert. Das Filter selbst verändert direkt den Betrag des Modulationsfrequenzspektrums als Funktion der Modulationsfrequenz und der Trägerfrequenz. Eine beispielhafte Implementierung wird im Folgenden vorgestellt.

Das Verfahren erfordert zunächst die Berechnung des Modulationsfrequenzspektrums, wobei jedoch folgende Zusätze zu beachten sind: bei der Berechnung des Spektrogramms entsprechend Gl (1) wird die zu dem komplexen Spektrogramm gehörende Originalphase $\varphi$ für die spätere Resynthese gespeichert, ebenso wie bei der Berechnung des Modulationsfrequenzspektrums die Original-Modulationsphase $\varphi_m$.

Für das Modulationsfilter wird zunächst der Bereich der Trägerfrequenzen $f_f$ und der Modulationsfrequenzen $f_{f,m}$ und der zugehörigen Indices $n_f$ und $m_f$ festgelegt, auf den das Filter angewandt werden soll:

$$f_u \leq f_f \leq f_o \quad \Rightarrow \quad n_u \leq n_f \leq n_o$$
$$f_{m,u} \leq f_{f,m} \leq f_{m,o} \quad \Rightarrow \quad m_u \leq m_f \leq m_o \tag{8}$$

Das Filter kann prinzipiell auf einen beliebigen Bereich sowohl von Trägerfrequenzen als auch von Modulationsfrequenzen angewandt werden, bei Dieselgeräuschen bietet sich jedoch die Filterung bei Vielfachen der halben Motorordnung an. Ein typischer Bereich für eine Filterauslegung ist so der Trägerfrequenzbereich von 400 Hz bis 3 kHz und eine Modulationsbreite von 1,68 Hz, was bei den oben beschriebenen Parametereinstellungen einer Stützstellenzahl von $m$=5 Punkten entspricht.

Das Filter verändert nun den Betrag des Modulationsfrequenzspektrums innerhalb des oben definierten Bereiches wie folgt:

$$\left|P_{m,f}(n,m)\right| = \left|P_m(n,m)\right| \cdot (1 - A(m)) \quad \text{für } n \in n_f, m \in m_f$$
$$\left|P_{m,f}(n,m)\right| = \left|P_m(n,m)\right| \quad \text{für } n \notin n_f, m \notin m_f \tag{9}$$

Der Faktor $A(m)$ bestimmt hierbei die Stärke der Filterung. Er wird aus einer Konstante $A$ und einem Hanning-Fenster der Breite der zu filternden Modulationen berechnet, so daß die maximale Abschwächung in der Mitte des zu filternden Modulationsbereiches auftritt und zu den Seiten hin abnimmt. $A(m)$ wird definiert als

$$A(m) = A \cdot w(m) \tag{10}$$

Als Standardwert hat sich ein Faktor von $A$=0,75, demnach eine Abschwächung der Modulation um 75%, bewährt. Wird $A$ negativ gesetzt, so bedeutet dies eine Verstärkung der Modulation und somit eine Verstärkung der impulshaften Anteile im Geräusch (z. B. des Nagelns) eines Dieselfahrzeugs.

Im Prinzip kann in einem Verarbeitungsschritt eine beliebige Anzahl von Filtern parallel angewandt werden, so daß sowohl mehrere Motorordnungen oder unterschiedliche Trägerfrequenzbereiche gleichzeitig gefiltert werden können.

Aus dem gefilterten Modulationsfrequenzspektrum wird anschließend in einem zweistufigen Prozeß das gefilterte Zeitsignal berechnet.

In der ersten Stufe wird das Modulationsfrequenzspektrum durch inverse gleitende Kurzzeit-DFT-Transformationen wieder in ein Spektrogramm zurückgewandelt. In der zweiten Stufe wird das Spektrogramm durch inverse gleitende Kurzzeit-DFT-Transformationen und das Overlap-and-add-Verfahren in ein Zeitsignal zurücktransformiert. Bei beiden Transformationen werden die originalen Phasen hinzugezogen, die bei den Hintransformationen abgespeichert wurden.

Bei einer DFT werden bekanntlich Frequenzlinien von der Frequenz $f$=0 Hz bis zur Abtastfrequenz $F_a$ berechnet, wobei nur die Frequenzen bis zur halben Abtastfrequenz (der sog. Nyquistfrequenz $F_n = F_a/2$) weiter ausgewertet werden. Die Frequenzlinien oberhalb der Nyquistfrequenz weisen Werte auf, die dem konjugiert Komplexen entsprechen, wobei die zugehörige Frequenzlinie an der Nyquistfrequenz gespiegelt wird.

Dieser Zusammenhang muß bei den Rücktransformationen berücksichtigt werden, da durch das Modulationsfilter nur der Bereich bis zur Nyquistfrequenz verändert wird. Der Bereich zwischen der Nyquistfrequenz der Modulationsanalyse und der Abtastfrequenz (hier der Zeitachse des Spektrogramms) muß vor der Rücktransformation berechnet werden:

$$P_{m,f}(n,m_1)\Big|_{m_1=M/2+1}^{M} = P^*_{m,f}(n,m_2)\Big|_{m_2=M/2-1}^{0} \qquad (11)$$

wobei das komplexe Modulationsfrequenzspektrum aus dem Betrag des Modulationsfrequenzspektrums und der Orginalphase $\varphi_m$ berechnet wird:

$$P_{m,f}(n,m)\Big|_{M=0}^{M/2} = \left|P_{m,f}(n,m)\right| \cdot e^{j\varphi_m(n,m)}\Big|_{m=0}^{M/2} \qquad (12)$$

Für die Berechnung des Modulationsfrequenzspektrums wurden DFTs auf jede einzelne Trägerfrequenzlinie $n$ über den zeitlichen Verlauf des Betrages des Spektrogramms angewandt. Der Betrag des Spektrogramms wurde folglich als eine reale Zeitfunktion angesehen, so daß der Imaginärteil des komplexen Eingangssignals für die DFTs zu Null gesetzt wurde. Dies muß bei der Rücktransformation entsprechend berücksichtigt werden, der Betrag des gefilterten Spektrogramms $P_f(n,m)$ ist somit identisch mit dem Realteil der inversen DFTs bei jeder Frequenzlinie (also den Index m):

$$\left|P_f(n,m)\right|\Big|_{m=0}^{M} = Real\left(InvDFT(P_{m,f}(n,m))\Big|_{m=0}^{M}\right) \qquad (13)$$

Das komplexe gefilterte Spektrogramm wird nun wiederum aus dem nach Gl. (13) berechneten Betrag und der gespeicherten Originalphase berechnet, wobei nur die Werte bis zur Nyquistfrequenz (jetzt der DFT aus dem Zeitbereich in den Frequenzbereich) sinnvoll sind:

$$P_f(n,m)\Big|_{n=0}^{N/2} = \left|P_f(n,m)\right| \cdot e^{j\varphi(n,m)}\Big|_{n=0}^{N/2} \qquad (14)$$

Der Bereich zwischen der Nyquistfrequenz und der Abtastfrequenz muß auch hier entsprechend Gl. (11) rekonstruiert werden:

$$P_f(n_1,m)\Big|_{n_1=N/2+1}^{N} = P^*_f(n_2,m)\Big|_{n_2=N/2-1}^{0} \qquad (15)$$

Das so gewonnene komplexe Spektrogramm kann nun durch Anwendung inverser DFTs auf jedes ursprüngliche Zeitfenster (Index m) und unter Berücksichtigung der zeitlichen Lage der einzelnen Fenster in ein Zeitsignal zurücktransformiert werden. Es ergeben sich Zeitsignalabschnitte $p_{fz}(k',m)$ aus dem Realteil der inversen DFTs:

$$p_{fz}(k',m)\Big|_{m=0}^{M} = Real\left(InvDFT(P_f(n,m))\Big|_{m=0}^{M}\right) \qquad (16)$$

Diese Zeitsignalabschnitte werden dann unter Berücksichtigung der Überlappung aufeinanderfolgender Abschnitte zum gefilterten Ausgangssignal zusammengefaßt.

Die oben beschriebene Vorgehensweise wird auf jeden im Signal enthaltenen Kanal angewandt, wobei in der Regel die Filter identisch sind. Prinzipiell können die Filter jedoch auch für jeden Kanal anders ausgelegt werden.

**Patentansprüche**

1. Verfahren zur Analyse von Geräuschen eines Verbrennungsmotors, enthaltend die Schritte:

   a) Aufzeichnung eines Signalverlaufes p(k), $0 \leq k \leq K$, des Geräusches über eine vorgegebene Aufzeichnungsdauer K;
   b) Ermittlung von Kurzzeitfrequenzspektren P(n, I) für den gesamten Signalverlauf p(k), $0 \leq k \leq K$, wobei jedes Kurzzeitfrequenzspektrum die Anteile der Frequenzen n in einem Zeitfenster der Breite N < K bei einem Zeitpunkt $0 \leq k_I \leq K$, $0 \leq I \leq L$, wiedergibt;
   c) Ermittlung der Modulationsfrequenzspektren $P_m(n, m)$ zu den Kurzzeitfrequenzspektren P(n, I), wobei jedes Modulationsfrequenzspektrum $P_m(n, m)$ die Anteile der Modulationsfrequenzen m an dem Trägersignal |P(n, I)|, $0 \leq I \leq L$, wiedergibt, das durch die betragsmäßigen Anteile der Frequenz n in allen Kurzzeitfrequenzspektren P(n, I) gebildet wird; **gekennzeichnet durch** folgenden Schritt :
   d) Filterung mindestens eines Modulationsfrequenzspektrums $P_m(n, m)$, wobei das gefilterte Modulationsfrequenzspektrum $P_{m,f}(n,m)$ definiert wird **durch**

$$\left|P_{m,f}(n,m)\right| = \left|P_m(n,m)\right| \cdot (1 - A \cdot w(m)) \quad \textit{für } n \in n_f, m \in m_f$$

$$\left|P_{m,f}(n,m)\right| = \left|P_m(n,m)\right| \qquad \textit{für } n \notin n_f, m \notin m_f \qquad ,$$

   wobei $n_u \leq n_f \leq n_o$, $m_u \leq m_f \leq m_o$, und A eine Konstante und w(m) eine Fensterfunktion der Breite der zu filternden Modulationen ist, und Rücktransformation des gefilterten Modulationsfrequenzspektrums in einen Signalverlauf.

2. Verfahren nach Anspruch 1,
   **dadurch gekennzeichnet, daß**
   die Aufzeichnung und Analyse des Signalverlaufes p(k) zeitdiskret erfolgt.

3. Verfahren nach Anspruch 2,
   **dadurch gekennzeichnet, daß**
   die Kurzzeitfrequenzspektren P(n, 1) mittels einer diskreten FourierTransformation gewonnen werden gemäß der Formel

$$P(n,l)\bigg|_{l=0}^{L} = \sum_{k=lN(1-O)}^{lN(1-O)+(N-1)} p(k) \cdot w(k - lN(1-O)) \cdot e^{-j\frac{2\pi kn}{N}} \bigg|_{l=0}^{L}$$

   wobei $0 \leq O \leq 1$ den Überlapp der Zeitfenster beschreibt und w eine Fensterfunktion ist, vorzugsweise ein Hanning- Fenster,
   und/oder daß
   die Modulationsfrequenzspektren $P_m(n, m)$ durch eine diskrete FourierTransformation gewonnen werden gemäß der Formel

$$P_m(n,m)\bigg|_{n=0}^{N} = \sum_{l=0}^{M-1} \left|P(n,l)\right| \cdot w(l) \cdot e^{-j\frac{2\pi lm}{M}} \bigg|_{n=0}^{N}$$

   wobei w eine Fensterfunktion der Breite M ist, vorzugsweise ein Hanning-Fenster.

**4.** Verfahren nach einem der Ansprüche 1 bis 3,
**dadurch gekennzeichnet, dass**
die Kurzzeitfrequenzspektren P(n, l) mittels einer Filterung des Signalverlaufes gewonnen werden, insbesondere mit Hilfe einer Terz-Filterbank.

**5.** Verfahren nach einem der Ansprüche 1 bis 4,
**dadurch gekennzeichnet, dass**
die Modulationsfrequenzspektren $P_m$(n, m) mittels einer Filterung der Kurzzeitfrequenzspektren P(n, l) gewonnen werden, insbesondere mit Hilfe einer Terz-Filterbank.

**6.** Vorrichtung zur Analyse von Geräuschen eines Verbrennungsmotors, enthaltend eine Datenverarbeitungseinheit mit einem Speicher für einen gemessenen Signalverlauf p(k) des Geräusches, welche dahingehend ausgebildet ist, ein Verfahren nach mindestens einem der Ansprüche 1 bis 5 auszuführen, indem in dem Speicher das Verfahren implementierende Programme abgelegt sind, wobei die Vorrichtung folgende Merkmale umfasst :

a) Mittel zur Aufzeichnung eines Signalverlaufes p(k), $0 \leq k \leq K$, des Geräusches über eine vorgegebene Aufzeichnungsdauer K;
b) Mittel zur Ermittlung von Kurzzeitfrequenzspektren P(n, l) für den gesamten Signalverlauf p(k), $0 \leq k \leq K$, wobei jedes Kurzzeitfrequenzspektrum die Anteile der Frequenzen n in einem Zeitfenster der Breite N < K bei einem Zeitpunkt $0 \leq k_l \leq K$, $0 \leq l \leq L$, wiedergibt;
c) Mittel zur Ermittlung der Modulationsfrequenzspektren $P_m$(n, m) zu den Kurzzeitfrequenzspektren P(n, 1), wobei jedes Modulationsfrequenzspektrum $P_m$(n, m) die Anteile der Modulationsfrequenzen m an dem Trägersignal |P(n, l)|, $0 \leq l \leq L$, wiedergibt, das durch die betragsmäßigen Anteile der Frequenz n in allen Kurzzeitfrequenzspektren P(n, l) gebildet wird;
d) Mittel zur Filterung mindestens eines Modulationsfrequenzspektrums $P_m$(n, m), wobei das gefilterte Modulationsfrequenzspektrum $P_{m,f}$(n,m) definiert wird durch

$$\left|P_{m,f}(n,m)\right| = \left|P_m(n,m)\right| \cdot (1 - A \cdot w(m)) \quad \textit{für } n \in n_f, m \in m_f$$

$$\left|P_{m,f}(n,m)\right| = \left|P_m(n,m)\right| \qquad \textit{für } n \notin n_f, m \notin m_f$$

wobei $n_u \leq n_f \leq n_o$, $m_u \leq m_f \leq m_o$, und $A$ eine Konstante und w(m) eine Fensterfunktion der Breite der zu filternden Modulationen ist, und Mittel zur Rücktransformation des gefilterten Modulationsfrequenzspektrums in einen Signalverlauf.

**Claims**

**1.** Method for analyzing noise of an internal combustion engine, containing the steps:

a) recording of a signal profile p(k), $0 \leq k \leq K$, of the noise over a predefined recording period K;
b) determining short-term.frequency spectra P(n, l) for the entire signal profile p(k), $0 \leq k \leq K$, each short-term frequency spectrum representing the components of the frequencies n in a time window with the width N < K at a time $0 \leq k_l \leq K$, $0 \leq l \leq L$;
c) determining the modulation frequency spectra $P_m$(n, m) for the short-term frequency spectra P(n, l), each modulation frequency spectrum $P_m$(n, m) representing the components of the modulation frequencies m of the carrier signal |P(n, l)|, $0 \leq l \leq L$ which is formed by the absolute value components of the frequency n in all the short-term frequency spectra P(n, l); **characterized by** the following step:
d) filtering at least one modulation frequency spectrum $P_m$(n, m), wherein the filtered modulation frequency spectrum $P_{m,f}$(n, m) is defined by

$$|P_{m,f}(n,\ m)|\ =\ |P_m(n,\ m)|.(1\ -\ A.w(m))\ \text{for}\ n\ \in\ n_f,\ m{\in}m_f$$

$$|P_{m,f}(n,m)|\ =\ |P_m\ (n,\ m)|\qquad\qquad \text{for}\ n\ \notin\ n_f,\ m{\notin}m_f,$$

where $n_n \le n_f \le n_0$, $m_n \le m_f \le m_0$, and $A$ is a constant and $w(m)$ is a window function with the width of the modulations to be filtered, and back transformation of the filtered modulation frequency spectrum into a signal profile.

2. Method according to Claim 1, **characterized in that** the signal profile p(k) is recorded and analyzed discretely over time.

3. Method according to Claim 2, **characterized in that** the short-term frequency spectra P(n, 1) are acquired by means of a discrete Fourier transformation according to the formula

$$P(n,l)\Bigg|_{l=0}^{L} \;\dot=\; \sum_{k=lN(1-O)}^{lN(1-O)+(N-1)} p(k)\cdot w(k-lN(1-O))\cdot e^{-j\frac{2\pi kn}{N}}\Bigg|_{l=0}^{L}$$

where $0 \le O \le 1$ describes the overlap of the time windows and w is a window function, preferably a Hanning window, and/or wherein the modulation frequency spectra $P_m(n, m)$ are acquired by means of a discrete Fourier transformation according to the formula

$$P_m(n,m)\Bigg|_{n=0}^{N} \;=\; \sum_{l=0}^{M-1} \big|P(n,l)\big|\cdot w(l)\cdot e^{-j\frac{2\pi l m}{M}}\Bigg|_{n=0}^{N}$$

where w is a window function with the width M, preferably a Hanning window.

4. Method according to one of Claims 1 to 3, **characterized in that** the short-term frequency spectra P(n, l) are acquired by filtering the signal profile, in particular using a one-third-octave filter bank.

5. Method according to one of Claims 1 to 4, **characterized in that** the modulation frequency spectra $P_m(n, m)$ are acquired by filtering the short-term frequency spectra P(n, l), in particular using a one-third-octave filter bank.

6. Device for analyzing noise of an internal combustion engine, containing a data processing unit with a memory for a measured signal profile p(k) of the noise, which data processing unit is designed to carry out a method according to at least one of Claims 1 to 5, in that programmes which implement the method are stored in the memory, wherein the device comprises the following features:

   a) means for recording a signal profile p(k), $0 \le k \le K$, of the noise over a predefined recording period K;
   b) means for determining short-term frequency spectra P(n, l) for the entire signal profile p(k), $0 \le k \le K$, each short-term frequency spectrum representing the components of the frequencies n in a time window with the width N < K at a time $0 \le k_l \le K$, $0 \le l \le L$;
   c) means for determining the modulation frequency spectra $P_m(n, m)$ for the short-time frequency spectra P(n, l), each modulation frequency spectrum $P_m(n, m)$ representing the components of the modulation frequencies m of the carrier signal |P(n, l)|, $0 \le l \le L$ which is formed by the absolute value components of the frequency n in all the short-term frequency spectra P(n, 1);

d) means for filtering at least one modulation frequency spectrum $P_m(n, m)$, wherein the filtered modulation frequency spectrum $P_{m, f}(n, m)$ is defined by

$$|P_{m,f}(n, m)| = |P_m(n, m)|.(1 - A.w(m)) \quad \text{for } n \in n_f, \, m \in m_f$$

$$|P_{m,f}(n, m)| = |P_m(n, m)| \qquad \text{for } n \notin n_f, \, m \notin m_f,$$

where $n_n \le n_f \le n_o$, $m_n \le m_f \le m_o$, and $A$ is a constant and $w(m)$ is a window function with the width of the modulations to be filtered, and means for back transformation of the filtered modulation frequency spectrum into a signal profile.

**Revendications**

1. Procédé pour analyser les bruits d'un moteur à combustion interne comprenant .les étapes suivantes :

   a) Enregistrement d'une courbe de signal p(k), $0 \le k \le K$, du bruit sur une durée d'enregistrement K donnée ;
   b) Détermination des spectres de fréquences à court terme-P(n, l) pour l'ensemble de la courbe de signal p(k), $0 \le k \le K$, chaque spectre de fréquences à court terme restituant les composantes des fréquences n dans un créneau temporel de largeur N < K à un instant $0 \le k_i \le K$, $0 \le l \le L$ ;
   c) Détermination des spectres de fréquences de modulation $P_m(n, m)$ pour les spectres de fréquences à court terme P(n, l), chaque spectre de fréquences de modulation $P_m(n, m)$ restituant les composantes des fréquences de modulation m dans le signal porteur $|P(n, l)|$, $0 \le l \le L$, qui est formé par les composantes numériques de la fréquence n dans tous les spectres de fréquences à court terme P(n, l) ; **caractérisé par** l'étape suivante :
   d) Filtrage d'au moins un spectre de fréquences de modulation $P_{m, f}(n, m)$, le spectre de fréquences de modulation $P_m(n, m)$ filtré étant défini par

$$|P_{m, f}(n, m)| = |P_m(n, m)| * (1 - A*w(m)) \quad \text{pour } n \in n_f, \, m \in m_f$$

$$|P_{m, f}(n, mz)| = |P_m(n, m)| \quad \text{pour } n \notin n_f, \, m \notin m_f$$

   avec $n_u \le n_f \le n_0$, $m_u \le m_f \le m_0$, A est une constante et w(m) une fonction de fenêtre ayant la largeur des modulations à filtrer, puis transformation inverse du spectre de fréquences de modulation filtré en une courbe de signal.

2. Procédé selon la revendication 1, **caractérisé en ce que** l'enregistrement et l'analyse de la courbe de signal p(k) s'effectuent discrètement dans le temps.

3. Procédé selon la revendication 2, **caractérisé en ce que** les spectres de fréquences à court terme P(n, l) sont obtenus au moyen d'une transformation de Fourier discrète selon la formule

$$P(n,l) \int_{l=0}^{L} = \sum_{k=lN(1-O)}^{lN(1-O)+(N-1)} p(k) \cdot w(k - lN(1-O)) \cdot e^{-j\frac{2mkn}{N}} \int_{l=0}^{L}$$

où $0 \le O \le 1$ décrit le chevauchement du créneau temporel et w est une fonction de fenêtre, de préférence une fenêtre de Hanning, et/ou que les spectres de fréquences de modulation $P_m(n, m)$ sont obtenus au moyen d'une transformation de Fourier discrète selon la formule

$$P_m(n,m)\Big|_{n=0}^{N} = \sum_{l=0}^{M-1}|P(n,l)|\ \ w(l)\ \ e^{\,j\frac{2\pi l m}{M}}\Big|_{n=0}^{N}$$

où w est une fonction de fenêtre de largeur M, de préférence une fenêtre de Hanning.

**4.** Procédé selon l'une des revendications 1 à 3, **caractérisé en ce que** les spectres de fréquences à court terme P (n, l) sont obtenus au moyen d'un filtrage de la courbe dé signal, notamment à l'aide d'un groupe de filtres de tierce.

**5.** Procédé selon l'une des revendications 1 à 4, **caractérisé en ce que** les spectres de fréquences de modulation $P_m(n, m)$ sont obtenus au moyen d'un filtrage des spectres de fréquences à court terme P(n, l), notamment à l'aide d'un groupe de filtres de tierce.

**6.** Dispositif pour analyser les bruits d'un moteur à combustion interne comprenant une unité de traitement de données munie d'une mémoire pour une courbe de signal p(k) mesurée du bruit, laquelle est conçue pour réaliser un procédé selon au moins l'une des revendications 1 à 5 en ce que des programmes qui mettent en oeuvre le procédé sont stockés dans la mémoire, le dispositif comprenant les caractéristiques suivantes .

a) Des moyens pour enregistrer une courbe de signal p(k), $0 \leq k \leq K$, du bruit sur une durée d'enregistrement K donnée ;
b) Des moyens pour déterminer les spectres de fréquences à court terme P(n, l) pour l'ensemble de la courbe de signal p(k), $0 \leq k \leq K$, chaque spectre de fréquences à court terme restituant les composantes des fréquences n dans un créneau temporel de largeur N < K à un instant $0 \leq k_i \leq K$, $0 \leq l \leq L$ ;
c) Des moyens pour déterminer les spectres de fréquences de modulation $P_m(n, m)$ pour les spectres de fréquences à court terme P(n, l), chaque spectre de fréquences de modulation $P_m(n, m)$ restituant les composantes des fréquences de modulation m dans le signal porteur |P(n, l)|, $0 \leq l \leq L$, qui est formé par les composantes numériques de la fréquence n dans tous les spectres de fréquences à court terme P(n, l) ;
d) Des moyens pour filtrer au moins un spectre de fréquences de modulation $P_m(n, m)$, le spectre de fréquences de modulation $P_{m,\,f}(n, m)$ filtré étant défini par

$$\left|P_{m,\,f}(n,\ m)\right|\ =\ \left|P_m(n,\ m)\right|*(1\ -\ A*w(m))\ \text{pour } n\in n_f,\ m\in m_f$$

$$\left|P_{m,\,f}(n,\ m)\right|\ =\ \left|P_m(n,\ m)\right|\ \text{pour } n\notin n_f,\ m\notin m_f$$

avec $n_u \leq n_f \leq n_0$, $m_u \leq m_f \leq m_0$, A est une constante et w(m) une fonction de fenêtre ayant la largeur des modulations à filtrer, et des moyens pour effectuer la transformation inverse du spectre de fréquences de modulation filtré en une courbe de signal.

Fig. 1

Fig. 2

N

$\Delta f_S = f_A/N$

$\Delta f_m = f_A \, / \, N(1-O)M$

1 2 ...

M

m

$|P_m(n,m)|$

.72

48

24

1

1     90     180

m

**Fig. 3**

$P_{mi}(n,m)$

72

48

24

1

1     90     180

m

$P_{mi}(n,m)$

72

48

24

1

1     90     180

m

**Fig. 4**

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **M. BODDEN ; R. HEINRICHS.** Analysis of the time structure of gear rattle. *PROCEEDINGS OF INTER-NOISE 99,* 02. Dezember 1999, 1273-1278